# EUROPÄISCHE PATENTSCHRIFT

(11) **EP 2 334 501 B1**
(45) Veröffentlichungstag und Bekanntmachung des Hinweises auf die Patenterteilung: **13.06.2018**
(21) Anmeldenummer: 09748973.6
(22) Anmeldetag: 07.10.2009
(51) Int. Cl.: B60C 23/04

(54) **REIFENDRUCKKONTROLLSYSTEM MIT TESTFUNKTION FÜR DAS SENSORMODUL**
TIRE PRESSURE MONITORING SYSTEM HAVING A TEST FUNCTION FOR THE SENSOR MODULE
SYSTÈME DE CONTRÔLE DE PRESSION DE PNEU PRÉSENTANT UNE FONCTION D ESSAI POUR LE MODULE DE DÉTECTION

(30) Priorität: 15.10.2008 DE 102008051681
(43) Veröffentlichungstag der Anmeldung: 22.06.2011
(73) Patentinhaber: KNORR-BREMSE Systeme für Nutzfahrzeuge GmbH, 80809 München (DE)
(72) Erfinder: STÖHR, Markus, 70567 Stuttgart (DE)
(74) Vertreter: Schönmann, Kurt
(86) Internationale Anmeldenummer: PCT/EP2009/007187
(87) Internationale Veröffentlichungsnummer: WO 2010/043327

(56) Entgegenhaltungen:
- DE-B3-102007 007 136
- US-A1- 2002 130 771
- US-A1- 2004 069 057

## Beschreibung

Die Erfindung geht aus einer Vorrichtung zur Erfassung und drahtlosen Übertragung wenigstens eines den Zustand eines Fahrzeugreifens eines Fahrzeugs charakterisierenden Messsignals, gemäß dem Oberbegriff von Anspruch 1.

Vorrichtungen zur Erfassung und Übertragung wenigstens eines den Zustand eines Fahrzeugreifens charakterisierenden Messsignals wie Reifenluftdruck und/oder der Reifenlufttemperatur sind insbesondere Reifendruckkontrolleinrichtungen (Tire Pressure Monitoring System, TPMS) und werden zur Überwachung des Reifenluftdrucks bei Fahrzeugen eingesetzt, um Reifendefekte aufgrund von zu geringem Reifenluftdruck zu verhindern und damit die Anzahl der Unfälle, die auf defekte Reifen zurückzuführen sind, zu reduzieren. Wird ein Fahrzeug mit zu geringem Reifenluftdruck betrieben, so führt dies zu erhöhter Walkarbeit an den Reifenflanken und damit zu erhöhtem Verschleiß des Reifens. Bei hohen Beschleunigungen kann ein so geschwächter Reifen u. U. der Belastung nicht mehr standhalten und platzen. Neben Reifenbeschädigungen sind schleichende Plattfüße auf Grund der Gasdiffusion durch das Reifengummi über die Zeit eine wesentliche Ursache für Reifenminderdruck. Der Reifenfülldruck ist aber nicht nur eine wichtige Größe für die Verkehrssicherheit. Auch Fahrkomfort, Reifenlebensdauer und Kraftstoffverbrauch werden deutlich vom Fülldruck beeinflusst. Ein um 0,6 bar reduzierter Fülldruck kann den Kraftstoffverbrauch um bis zu 4 % erhöhen und die Lebensdauer des Reifens um bis zu 50 % verkürzen. Auch der steigende Anteil von Reifen mit Notlaufeigenschaften erfordert den Einsatz von Reifendruckkontrollsystemen, da der Autofahrer einen Reifen mit erheblichem Minderdruck nicht mehr anhand des Fahrverhaltens erkennen kann. Um zu verhindern, dass der Fahrer die für diesen Fall gültigen Geschwindigkeits- und Entfernungslimits unwissentlich überschreitet, dürfen Notlaufreifen nur in Verbindung mit Reifendruckkontrollsystemen oder Plattrollwarnern eingesetzt werden.

Grundsätzlich unterscheidet man zwei Typen von Reifendruckkontrollsystemen: Direkte und indirekte Systeme.

In direkten Systemen wird in jeden Reifen des Fahrzeugs ein Sensormodul mit Drucksensor installiert. Dieses übermittelt über eine codierte Hochfrequenz-Übertragungsstrecke Daten aus dem Reifeninneren, wie Reifenluftdruck und Reifenlufttemperatur, an ein Steuergerät. Im Steuergerät können diese Daten ausgewertet werden und so neben Druckverlusten in einzelnen Reifen auch langsame Druckverluste in allen Reifen (z. B. infolge von Diffusion durch das Gummi) erkannt werden. Sinkt der Reifenluftdruck unter eine festgelegte Schwelle oder übersteigt der Druckgradient einen bestimmten Wert, so wird der Fahrer durch ein optisches oder akustisches Signal gewarnt. Die Sensormodule werden in der Regel mit Hilfe einer Batterie versorgt. Daraus ergeben sich im Vergleich zu anderen Anwendungen Zusatzanforderungen bezüglich Stromverbrauch, Medienresistenz und Beschleunigungsempfindlichkeit. Als Sensorelemente kommen mikromechanische Absolutdrucksensoren zum Einsatz.

Die mit Druck- und Temperatursensoren im Reifen gemessenen Daten werden im Sensormodul aufbereitet, auf ein HF-Trägersignal aufmoduliert und über eine Antenne abgestrahlt. Dieses Signal wird entweder über einzelne Antennen an den Radkästen oder in einem zentralen Empfänger (z.B. im Steuergerät von bestehenden Remote Keyless Entry Systemen) detektiert.

In indirekten Systemen wird ein Druckverlust im Reifen nicht unmittelbar, sondern über eine abgeleitete Größe ermittelt. Hierzu erfolgt eine mathematischstatistische Auswertung der Drehzahlunterschiede aller Räder untereinander. Die hierfür benötigte Raddrehzahl wird in Fahrzeugen mit ABS-Systemen durch bereits vorhandene Sensoren ermittelt und an das ABS-Steuergerät übermittelt. Drehzahlunterschiede treten auf, wenn sich durch Druckverlust der Durchmesser des entsprechenden Reifens reduziert und somit seine Drehzahl relativ zu den anderen drei Reifen steigt. Durch Differenzbildung, die mithilfe einer kostengünstigen Erweiterung der ABS-Softwarealgorithmen realisierbar ist, können größere Druckverluste an bis zu drei Reifen erkannt werden.

Nachteile des indirekten Systems sind vergleichsweise lange Detektionszeiträume (10 min) und eine hohe Detektionsschwelle im Vergleich zu direkten Systemen. Aktuelle, auf dem Markt befindliche indirekte Systeme sind nicht in der Lage, langsame Druckverluste durch Diffusion in allen vier Reifen zu detektieren. Ein weiterer Nachteil von direkten Systemen gegenüber indirekten Systemen liegt in den deutlich höheren Kosten und der batterieabhängigen, begrenzten Lebensdauer.

Abhängig von der Art der Aktivierung der Datenübertragung vom Sensormodul auf das Steuergerät sind bei den Sensormoduln im Wesentlichen drei Systeme bekannt: Permanent sendende Sensormodule; Sensormodule, welche nur im Fahrzustand des Fahrzeugs senden und Sensormodule, welche nur senden, wenn sie beispielsweise durch einen LF-Trigger getriggert werden.

Permanent sendende Sensormodule senden in festgelegten Zeitabständen ihre Messsignale an das Steuergerät. Sensormodule, welche nur im Fahrzustand des Fahrzeugs senden, weisen in der Regel Beschleunigungssensoren auf, durch welche der Fahrzustand abhängig vom Messsignal detektierbar ist.

Diese Typen von Sensormoduln befinden sich im noch nicht verbauten Auslieferungszustand in einem Strom sparenden Standby-Modus, von welchem aus sie erst in den Betriebsmodus gebracht werden müssen. Dazu müssen die Sensormoduln dem Steuergerät bekannt gemacht und einem Fahrzeugreifen zugeordnet werden. Ein solches Verfahren wird in US 2002/0130771 A1 beschrieben.

Eine Vorrichtung zur Erfassung und drahtlosen Übertragung wenigstens eines den Zustand eines Fahrzeugreifens eines Fahrzeugs charakterisierenden Messsignals ist beispielsweise aus DE 103 01 192 A1 bekannt. Ein Problem bei den Sensormoduln solcher Vorrichtungen besteht darin, dass sie bisher auf ihre Funktionstüchtigkeit mittels eines speziellen HF-Kommunikations-moduls getestet werden, was auch eine Überprüfung des Ladezustands des elektrischen Energiespeichers beinhaltet. Dies bedingt jedoch eine zusätzliche Investition seitens der Fahrzeugwerkstätten.

Weiterhin können die Sensormodule auch ungetestet eingebaut werden. Stellt sich dann aber heraus, dass bei einem oder einigen der an einem Fahrzeug verbauten Sensormodule der Energiespeicher entleert oder defekt ist, so müssen diese bereits in oder am Fahrzeugreifen verbauten Sensormodule wieder ausgebaut und gegen funktionstüchtige Sensormodule ausgetauscht werden, was mit einem gewissen Aufwand verbunden ist.

Gemäß US 2004/0069057 A1 weist ein Sensormodul einen elektrischen Stromkreis auf, welcher durch manuelle Belastung einer äußeren Mantelwand des Sensormoduls geschlossen wird, indem die Belastung der Mantelwand auf eine stromleitendes Federelement übertragen wird, welches daraufhin einen elektrischen Kontakt berührt. Nach Schließen des Stromkreises wird im Rahmen einer Testfunktion ein optisches und akustisches Signal gegeben.

In der gattungsbildenden DE 10 2007 007 136 B3 wird eine Testfunktion eines Sensormoduls einer Vorrichtung zur Erfassung und drahtlosen Übertragung wenigstens eines den Zustand eines Fahrzeugreifens eines Fahrzeugs charakterisierenden Messsignals dadurch aktiviert, dass ein Beschleunigungssensor für eine vorgegebene Zeitdauer keine Beschleunigung misst. Dann kann davon ausgegangen werden, dass das Fahrzeug parkt bzw. das Sensormodul noch nicht verbaut ist. Der Betriebsmodus des Sensormoduls wird hingegen aktiviert, wenn die vom Beschleunigungssensor gemessene Beschleunigung eine vorgegebene Grenzbeschleunigung überschreitet. Damit kann aber nicht ausgeschlossen werden, dass der Testmodus langzeitig aktiviert bleibt, was zu einem schnellen Leeren des Energiespeichers des Sensormoduls führen kann.

Der vorliegenden Erfindung liegt daher die Aufgabe zugrunde, eine Vorrichtung der eingangs erwähnten Art derart weiter zu entwickeln, dass eine einfache und zuverlässige Funktionsüberprüfung der Sensormodule insbesondere im noch nicht eingebauten Zustand möglich ist.

Diese Aufgabe wird erfindungsgemäß durch die Merkmale von Anspruch 1 gelöst.

### Offenbarung der Erfindung

Die Erfindung sieht vor, dass das Sensormodul eine Einrichtung zur Überprüfung der Funktionsfähigkeit des Sensormoduls aufweist, mit wenigstens einer Testroutine und Mittel zur Aktivierung der Testroutine, welche Folgendes umfassen: Eine Einrichtung mit einem Beschleunigungssensor, welche abhängig von der auf das Sensormodul wirkenden Beschleunigung den Start der Testroutine aktiviert, wobei die Testroutine aktiviert wird, wenn das Sensormodul vor dem Einbau manuell beschleunigt und dann die vom Beschleunigungssensor gemessene Beschleunigung eine vorgegebene Mindestbeschleunigung überschreitet eine Einrichtung mit einem elektrischen Stromkreis, welche abhängig von einem durch den elektrischen Stromkreis fließenden Strom den Start der Testroutine aktiviert, und/oder

Die Testroutine kann dabei beliebige, die Funktionsfähigkeit des Sensormoduls in jeglicher Hinsicht überprüfende Tests durchführen. Dadurch kann ein Sensormodul wenigstens vor seinem Einbau überprüft und ein Einbau und nachfolgender Austausch defekter Sensormodule vermieden werden.

Die Einrichtung zur Überprüfung der Funktionsfähigkeit des Sensormoduls sowie die Mittel zur Aktivierung der Testroutine können mit einfachen Mitteln und kostengünstig realisiert werden.

Durch die in den Unteransprüchen aufgeführten Maßnahmen sind vorteilhafte Weiterbildungen und Verbesserungen der in Anspruch 1 angegebenen Erfindung möglich.

Gemäß einer besonders zu bevorzugenden Ausführungsform beinhaltet die Testroutine eine Überprüfung des Ladezustands des Energiespeichers. Damit wird verhindert, dass Sensormodule mit defektem oder entleertem Energiespeicher verbaut werden. Insbesondere können damit Fälle vermieden werden, in welchen ein entleerter Energiespeicher erst nach dem Einbau durch ein fehlendes Messsignal detektiert wird.

Gemäß einer Weiterbildung dieser Maßnahme beinhaltet die Testroutine eine Aussendung eines Messsignals sowie eine Überprüfung des Ladezustands des Energiespeichers vor, während und nach der Aussendung des Messsignals.

Damit wird durch die Testroutine der Betriebszustand des Sensormoduls simuliert und überprüft, ob die vorhandene Energiereserve des Energiespeichers dafür ausreichend ist.

Das im Rahmen der Testroutine ausgesendete Messsignal ist insbesondere ein aus einem vorangehenden Messvorgang stammendes, in einem Speicher der Einrichtung zur Überprüfung der Funktionsfähigkeit des Sensormoduls gespeichertes und aus diesem auslesbares Messsignal.

Alternativ kann die Einrichtung zur Überprüfung der Funktionsfähigkeit des Sensormoduls wenigstens einen dem Energiespeicher nach der Aktivierung der Testroutine zuschaltbaren Lastwiderstand beinhalten, durch welchen dann die bei einem Sendevorgang vorhandene Last simuliert wird.

Eine besonders zu bevorzugende Weiterbildung dieser Ausführungsform sieht vor, dass das Sensormodul selbst eine Anzeigeeinrichtung aufweist, durch welche das Ergebnis der Überprüfung des Ladezustands des Energiespeichers anzeigbar ist. Die Anzeigeeinrichtung kann beispielsweise wenigstens eine LED umfassen.

Zusätzlich können die Mittel zur Aktivierung der Testroutine eine Einrichtung mit einem elektrischen Stromkreis umfassen, welche abhängig von einem durch den elektrischen Stromkreis fließenden Strom den Start der Testroutine aktiviert. Dann kann vorgesehen sein, dass der elektrische Stromkreis von außen her zugängige Kontakte aufweist und derart ausgebildet ist, dass er durch Anlegen eines Multimeters an die Kontakte geschlossen wird und die dadurch aktivierte Testroutine einen Stromfluss durch den elektrischen Stromkreis bzw. eine zwischen den Kontakten anliegende Spannung erzeugt und gegebenenfalls verändert, wobei der Stromfluss bzw. die Spannung durch das Mulimeter mess- und darstellbar ist. Dies stellt eine besonders kostengünstige Ausführung dar, weil ein solcher Stromkreis am Sensormodul einfach zu realisieren und ein Multimeter in der Regel in jeder Fahrzeugwerkstatt vorhanden ist.

Für den Fall, dass die Mittel zur Aktivierung der Testroutine eine Einrichtung umfassen, welche abhängig von der Feldstärke eines im Bereich des Sensormoduls wirksamen Magnetfelds den Start der Testroutine aktiviert, weist diese Einrichtung bevorzugt wenigstens einen Magnetfeldsensor und/oder einen Magnetschalter auf, welcher abhängig von der Feldstärke des im Bereich des Sensormoduls wirksamen Magnetfelds den Start der Testroutine aktiviert. Eine solche, eine gewisse magnetische Mindestfeldstärke überschreitende und kostengünstige Magnetfeldquelle kann beispielsweise durch einen Permanentmagneten gebildet werden.

Falls das Sensormodul von dem eingangs erwähnten Typ ist, das erst im Fahrzustand des Fahrzeugs ein Messsignal generiert und an das Steuergerät überträgt, beinhaltet ein solches Sensormodul zur Detektion des Fahrzustands des Fahrzeugs wenigstens einen Beschleunigungssensor. Dieser aktiviert dann abhängig von der Zentripetalbeschleunigung bzw. Umfangsbeschleunigung am Fahrzeugrad den Betriebszustand des Sensormoduls. Dieser in einem solchen Sensormodul ohnehin vorhandene Beschleunigungssensor wird im Sinne einer vorteilhaften Doppelfunktion dann bevorzugt auch dazu verwendet, die Testroutine zu aktivieren, etwa wenn das Sensormodul vor dem Einbau manuell entsprechend geschüttelt und dann die vom Beschleunigungssensor gemessene Beschleunigung eine gewisse vorgegebene Mindestbeschleunigung überschreitet.

Um zu verhindern, dass die Testroutine aufgrund von Magnetfeldern, Beschleunigungsbelastungen oder Kurzschlüssen unbeabsichtigt in kurzen Zeitabständen mehrmals hintereinander aktiviert und dadurch der Ladezustand des Energiespeichers unerwünscht herabgesetzt wird, ist die Einrichtung zur Überprüfung der Funktionsfähigkeit des Sensormoduls bevorzugt derart ausgebildet, dass die Testroutine nur in bestimmten Mindestzeitabständen aktivierbar ist.

Aus dem gleichen Grund kann die Einrichtung zur Überprüfung der Funktionsfähigkeit des Sensormoduls derart ausgebildet sein, dass die Testroutine nur in vom Fahrbetrieb des Fahrzeugs abweichenden Zuständen wie im Fahrzeugstillstand oder im Auslieferungszustand des Sensormoduls aktivierbar ist, in welchen das Sensormodul noch nicht am oder in den Fahrzeugreifen verbaut ist.

Da es sinnvoll ist, die Testroutine zeitlich kurz vor dem Einbau des Sensormoduls zu durchlaufen, ist die Einrichtung zur Überprüfung der Funktionsfähigkeit des Sensormoduls bevorzugt derart ausgebildet, dass das Sensormodul durch die Aktivierung der Testfunktion vom Auslieferungszustand in den Betriebszustand geschaltet wird.

Alternativ kann die Einrichtung zur Überprüfung der Funktionsfähigkeit des Sensormoduls derart ausgebildet sein, dass das Sensormodul nach dem Ablauf der Testroutine in den vor dem Ablauf der Testroutine herrschenden Zustand zurück versetzt wird, beispielsweise wieder in den Auslieferungszustand, um das Sensormodul beispielsweise bereits vor seiner Auslieferung zu testen.

Zusätzlich können die Mittel zur Aktivierung der Testroutine Folgendes umfassen: Eine Einrichtung, welche abhängig von der Feldstärke eines im Bereich des Sensormoduls wirksamen Magnetfelds den Start der Testroutine aktiviert.

Nachstehend sind Ausführungsbeispiele der Erfindung in der Zeichnung dargestellt und in der nachfolgenden Beschreibung näher erläutert. Bei den Ausführungsbeispielen sind identische und gleich wirkende Baugruppen und Bauteile durch die gleichen Bezugszahlen gekennzeichnet.

In der Zeichnung zeigt
- Fig.1: eine Querschnittsdarstellung eines Fahrzeugrades mit einem Sensormodul einer Vorrichtung zur Erfassung und Übertragung wenigstens eines den Zustand eines Fahrzeugreifens charakterisierenden Messsignals gemäß einer bevorzugten Ausführungsform der Erfindung;
- Fig.2: eine Seitenansicht einer Zugmaschine mit der Vorrichtung von Fig. 1;
- Fig.3: ein Ablaufschema einer in der Vorrichtung von Fig.1 ablaufenden Testroutine;
- Fig.4: ein Ablaufschema einer weiteren in der Vorrichtung von Fig.1 ablaufenden Testroutine.

### Beschreibung des Ausführungsbeispiels

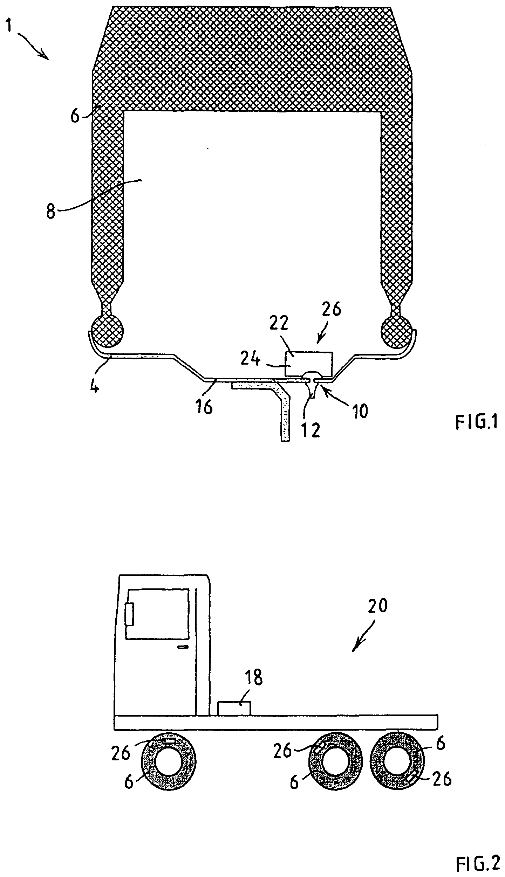

In Fig.1 ist ein Fahrzeugrad 1 eines Kraftfahrzeugs im Querschnitt gezeigt, wobei das Fahrzeugrad 1 gegenüber einem in Fig.2 gezeigten Chassis mit Hilfe einer hier nicht gezeigten Scheibenbremse abgebremst wird. Das Fahrzeugrad 1 besteht im wesentlichen aus einer Radfelge 4 und einem aufgezogenen Reifen 6, wobei zwischen dem Reifen 6 und der Radfelge 4 eine Druckluftkammer 8 ausgebildet ist, welche durch ein in einer Ventilaufnahme 10 der Radfelge 4 lösbar aufgenommenes Reifenventil 12 be- und entlüftbar ist.

Das Fahrzeugrad 1 ist mit einer Vorrichtung 20 zur Erfassung und Übertragung wenigstens eines den Zustand des Reifens 6 charakterisierenden Messsignals wie Reifenluftdruck und/oder der Reifenlufttemperatur in der Druckluftkammer 8 versehen, welche einen Reifenluftdrucksensor 22 sowie einen Reifenlufttemperatursensor 24 beinhaltendes Sensormodul 26 umfasst. Alternativ könnte das Sensormodul 26 nur einen Reifendruckluftsensor 22 oder nur einen Reifenlufttemperatursensor 24 beinhalten und/oder weitere Sensoren, mit welchen den Zustand des Reifens 6 charakterisierende Messsignale generierbar sind, wie beispielsweise einen Beschleunigungssensor zur Detektion eines Fahrzustands des Kraftfahrzeugs abhängig vom Beschleunigungssignal.

Das Sensormodul 26 wird von einer hier nicht explizit gezeigten elektrischen Energiequelle, beispielsweise von einer auswechselbaren Batterie mit elektrischer Energie versorgt und übermittelt über eine codierte Hochfrequenz-Übertragungsstrecke die Werte für den Reifenluftdruck und die Reifenlufttemperatur aus Druckluftkammer 8 an ein Steuergerät 18 im Fahrzeug, wie Fig.2 veranschaulicht, wo bevorzugt jeder Fahrzeugreifen 6 mit einem solchen Sensormodul ausgestattet ist. Im Steuergerät 18 werden diese Daten ausgewertet und so neben Druckverlusten in einzelnen Reifen 6 auch langsame Druckverluste in allen Reifen (z. B. infolge von Diffusion durch das Gummi) erkannt. Weiterhin kann auch eine zu hohe Reifenlufttemperatur erkannt werden.

Gemäß der bevorzugten Ausführungsform von Fig.1 kann das Sensormodul 26 mit dem Reifenventil 12 eine Baueinheit bilden, welche in einer Ventilaufnahme 10 in einem Felgenbett 16 der Radfelge 4 aufgenommen und gehalten ist. Diese Ventilaufnahme 10 wird bevorzugt durch ein Durchgangsloch im Bereich des Felgenbetts 16 der Radfelge 4 gebildet. Dabei ragt der Teil dieser Baueinheit bzw. des Sensormoduls 26, welcher den Reifenluftdrucksensor 22 und den Reifenlufttemperatursensor 24 trägt, in die Druckluftkammer 8 hinein.

Das Sensormodul 26 weist eine Einrichtung zur Überprüfung der Funktionsfähigkeit des Sensormoduls 26 auf, mit wenigstens einer Testroutine und Mittel zur Aktivierung der Testroutine, welche folgendes umfassen:
a) eine Einrichtung, welche abhängig von der Feldstärke eines im Bereich des Sensormoduls 26 wirksamen Magnetfelds den Start der Testroutine aktiviert, und/oder
b) eine Einrichtung mit einem elektrischen Stromkreis, welche abhängig von einem durch den elektrischen Stromkreis fließenden Strom den Start der Testroutine aktiviert, und/oder
c) eine Einrichtung mit einem Beschleunigungssensor, welche abhängig von der auf das Sensormodul wirkenden Beschleunigung den Start der Testroutine aktiviert.

Dadurch kann der Ladezustand des elektrischen Energiespeichers des Sensormoduls 26 im noch nicht verbauten Zustand überprüft und ein Einbau und Austausch defekter Sensormodule 26 vermieden werden.

Gemäß einer besonders zu bevorzugenden Ausführungsform beinhaltet die Testroutine eine Überprüfung des Ladezustands des Energiespeichers. Damit wird verhindert, dass Sensormodule 26 mit defektem oder entleertem Energiespeicher verbaut werden.

Gemäß einer Weiterbildung dieser Maßnahme beinhaltet die Testroutine eine Aussendung eines Messsignals sowie eine Überprüfung des Ladezustands des Energiespeichers vor, während und nach der Aussendung des Messsignals. Damit wird durch die Testroutine der Betriebszustand des Sensormoduls 26 simuliert und überprüft, ob die vorhandene Energiereserve des Energiespeichers dafür ausreichend ist.

Das im Rahmen der Testroutine ausgesendete Messsignal ist insbesondere ein aus einem vorangehenden Messvorgang stammendes, in einem Speicher der Einrichtung zur Überprüfung der Funktionsfähigkeit des Sensormoduls 26 gespeichertes und aus diesem auslesbares Messsignal.

Alternativ kann die Einrichtung zur Überprüfung der Funktionsfähigkeit des Sensormoduls 26 wenigstens einen dem Energiespeicher nach der Aktivierung der Testroutine zuschaltbaren Lastwiderstand beinhalten, durch welchen dann die bei einem Sendevorgang vorhandene Last simuliert wird.

Eine besonders zu bevorzugende Weiterbildung dieser Ausführungsform sieht vor, dass das Sensormodul 26 selbst eine Anzeigeeinrichtung aufweist, durch welche das Ergebnis der Überprüfung des Ladezustands des Energiespeichers anzeigbar ist. Die Anzeigeeinrichtung kann beispielsweise eine LED (light emitting diode) umfassen.

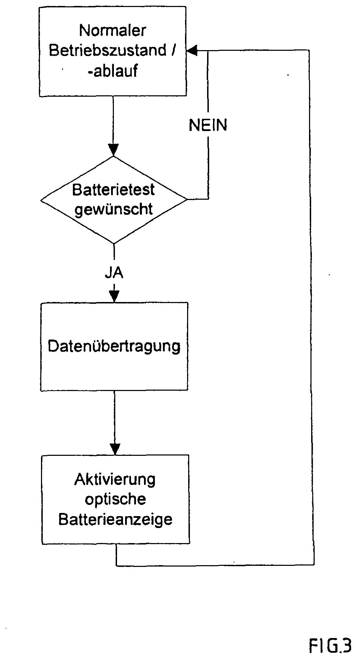

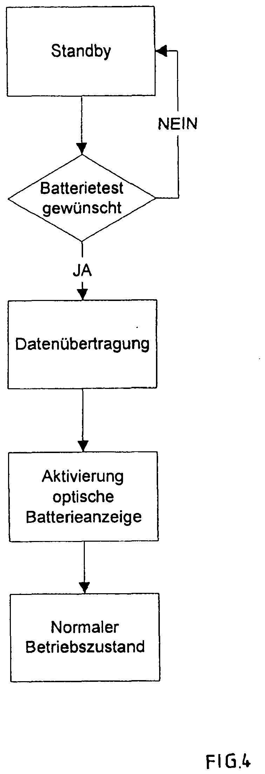

Der Ablauf einer solchen Testroutine ist in Fig.3 gezeigt. Falls beispielsweise ausgehend vom Betriebszustand des Sensormoduls 26 ein Batterietest gewünscht ist, der durch die oben beschriebenen Möglichkeiten a) bis c) zur Aktivierung der Testroutine durchgeführt wird, wird ein Messsignal generiert und ausgesendet (Datenübertragung) und das Ergebnis angezeigt (Aktivierung optische Anzeige). Die Aktivierung der Testroutine ist in Fig.3 und Fig.4 jeweils durch ein "JA" und eine Nicht-Aktivierung durch ein "NEIN" symbolisiert. Überschreitet daher die auf das noch nicht eingebaute Sensormodul 26 wirkende Beschleunigung eine vorgegebene Mindestbeschleunigung, so wird gemäß Ziffer c) oben die Testroutine aktiviert ("JA"), andernfalls nicht ("NEIN"). Analoges gilt für die Ziffern a) und b).

Die Einrichtung zur Überprüfung der Funktionsfähigkeit des Sensormoduls 26 ist bevorzugt derart ausgebildet, dass das Sensormodul 26 nach dem Ablauf der Testroutine in den vor dem Ablauf der Testroutine herrschenden Zustand automatisch zurück versetzt wird, beispielsweise wieder in den Auslieferungszustand, um das Sensormodul beispielsweise bereits vor seiner Auslieferung zu testen.

Für den obigen Fall a), dass die Mittel zur Aktivierung der Testroutine eine Einrichtung umfassen, welche abhängig von der Feldstärke eines im Bereich des Sensormoduls 26 wirksamen Magnetfelds den Start der Testroutine aktiviert, weist diese Einrichtung bevorzugt wenigstens einen Magnetfeldsensor und/oder einen Magnetschalter auf, welcher abhängig von der Feldstärke des im Bereich des Sensormoduls wirksamen Magnetfelds den Start der Testroutine aktiviert. Eine solche, eine gewisse magnetische Mindestfeldstärke überschreitende und kostengünstige Magnetfeldquelle kann beispielsweise durch einen Permanentmagneten gebildet werden.

Falls gemäß Fall b) die Mittel zur Aktivierung der Testroutine eine Einrichtung mit einem elektrischen Stromkreis umfassen, welche abhängig von einem durch den elektrischen Stromkreis fließenden Strom den Start der Testroutine aktiviert, kann gemäß einer weiteren Ausführungsform vorgesehen sein, dass der elektrische Stromkreis von außen her zugängige Kontakte aufweist und derart ausgebildet ist, dass er durch Anlegen eines Multimeters an die Kontakte geschlossen wird und die dadurch aktivierte Testroutine einen Stromfluss durch den elektrischen Stromkreis bzw. eine zwischen den Kontakten anliegende Spannung erzeugt und gegebenenfalls verändert, wobei der Stromfluss bzw. die Spannung durch das Mulimeter mess- und darstellbar ist. Dies stellt eine besonders kostengünstige Ausführung dar, weil ein solcher Stromkreis am Sensormodul einfach zu realisieren und ein Multimeter in der Regel in jeder Fahrzeugwerkstatt vorhanden ist.

Alternativ könnte der Stromkreis auch durch Verbinden der elektrischen Kontakte mittels eines elektrischen Leiters, bevorzugt durch ein Werkzeugabschnitt wie den Kopf eines Schraubendrehers geschlossen und so der Ablauf der Testroutine aktiviert werden.

Wenn das Sensormodul 26 von dem Typ ist, der erst im Fahrzustand des Fahrzeugs ein Messsignal generiert und an das Steuergerät überträgt, beinhaltet ein solches Sensormodul zur Detektion des Fahrzustands des Fahrzeugs wenigstens einen Beschleunigungssensor. Abhängig vom Messsignal dieses Beschleunigungssensors, d.h. wenn die Zentripetalbeschleunigung bzw. Umfangsbeschleunigung am Fahrzeugrad groß genug ist, wird der Betriebszustand des Sensormoduls aktiviert. Dieser in einem solchen Sensormodul 26 ohnehin vorhandene Beschleunigungssensor wird dann bevorzugt auch dazu verwendet, die Testroutine zu aktivieren, etwa wenn das Sensormodul 26 vor dem Einbau manuell entsprechend geschüttelt und dann die vom Beschleunigungssensor gemessene Beschleunigung eine gewisse vorgegebene Mindestbeschleunigung überschreitet.

Um zu verhindern, dass die Testroutine aufgrund von Magnetfeldern, Beschleunigungsbelastungen oder Kurzschlüssen unbeabsichtigt in kurzen Zeitabständen mehrmals hintereinander aktiviert und dadurch der Ladezustand des Energiespeichers unerwünscht herabgesetzt wird, ist die Einrichtung zur Überprüfung der Funktionsfähigkeit des Sensormoduls bevorzugt derart ausgebildet ist, dass die Testroutine nur in bestimmten Mindestzeitabständen aktivierbar ist.

Aus dem gleichen Grund kann die Einrichtung zur Überprüfung der Funktionsfähigkeit des Sensormoduls derart ausgebildet sein, dass die Testroutine nur in vom Fahrbetrieb des Fahrzeugs abweichenden Zuständen wie im Fahrzeugstillstand oder im Auslieferungszustand des Sensormoduls aktivierbar ist, in welchen das Sensormodul 26 noch nicht am oder in den Fahrzeugreifen verbaut ist.

Da es sinnvoll ist, die Testroutine zeitlich kurz vor dem Einbau des Sensormoduls 26 zu durchlaufen, ist die Einrichtung zur Überprüfung der Funktionsfähigkeit des Sensormoduls bevorzugt derart ausgebildet, dass das Sensormodul 26 durch die Aktivierung der Testfunktion vom Auslieferungszustand in den Betriebszustand geschaltet wird. Ein entsprechender Ablaufplan der Testroutine ist in Fig.3 gezeigt.

Falls ausgehend vom stand-by-Auslieferungszustand des Sensormoduls 26 ein Batterietest gewünscht ist, der durch die oben beschriebenen Möglichkeiten a) bis c) zur Aktivierung der Testroutine durchgeführt wird, wird ein Messsignal generiert und ausgesendet (Datenübertragung) und das Ergebnis angezeigt (Aktivierung optische Anzeige). Zugleich wird das Sensormodul 26 in den Betriebszustand versetzt.

Die Einrichtung zur Überprüfung der Funktionsfähigkeit des Sensormoduls bzw. die Testroutine ist bevorzugt in einem Microchip implementiert, welcher in das Sensormodul 26 integriert ist.

### Bezugszeichenliste

- 1: Fahrzeugrad
- 4: Radfelge
- 6: Reifen
- 8: Druckluftkammer
- 10: Ventilaufnahme
- 12: Reifenventil
- 16: Felgenbett
- 18: Steuergerät
- 20: Vorrichtung
- 22: Reifendrucksensor
- 24: Reifentemperatursensor
- 26: Sensormodul

## Patentansprüche

1. Vorrichtung (20) zur Erfassung und drahtlosen Übertragung wenigstens eines den Zustand eines Fahrzeugreifens (6) eines Fahrzeugs charakterisierenden Messsignals wie Reifenluftdruck und/oder Reifenlufttemperatur, beinhaltend wenigstens ein in oder am Fahrzeugreifen angeordnetes Sensormodul (26) mit mindestens einem Sensor (22, 24) zur Erfassung des Messsignals sowie mit einem das Sensormodul (26) mit elektrischer Energie versorgenden Energiespeicher, wobei das Sensormodul (26) weiterhin eine Einrichtung zur Überprüfung der Funktionsfähigkeit des Sensormoduls (26) aufweist, mit wenigstens einer Testroutine und Mittel zur Aktivierung der Testroutine, **dadurch gekennzeichnet, dass** die Mittel zur Aktivierung der Testroutine folgendes umfassen: Eine Einrichtung mit einem Beschleunigungssensor, welche abhängig von der auf das Sensormodul (26) wirkenden Beschleunigung den Start der Testroutine aktiviert, wobei die Testroutine aktiviert wird, wenn das Sensormodul vor dem Einbau manuell beschleunigt und dann die vom Beschleunigungssensor gemessene Beschleunigung eine vorgegebene Mindestbeschleunigung überschreitet.

2. Vorrichtung nach einem der vorhergehenden Ansprüche, **dadurch gekennzeichnet, dass** die Testroutine eine Überprüfung des Ladezustands des Energiespeichers beinhaltet.

3. Vorrichtung nach Anspruch 2, **dadurch gekennzeichnet, dass** die Testroutine eine Aussendung eines Messsignals sowie eine Überprüfung des Ladezustands des Energiespeichers vor, während und nach der Aussendung des Messsignals beinhaltet.

4. Vorrichtung nach Anspruch 3, **dadurch gekennzeichnet, dass** das Messsignal ein aus einem vorangehenden Messvorgang stammendes, in einem Speicher der Einrichtung zur Überprüfung der Funktionsfähigkeit des Sensormoduls (26) gespeichertes und aus diesem auslesbares Messsignal ist.

5. Vorrichtung nach Anspruch 2, **dadurch gekennzeichnet, dass** die Einrichtung zur Überprüfung der Funktionsfähigkeit des Sensormoduls (26) wenigstens einen dem Energiespeicher nach der Aktivierung der Testroutine zuschaltbaren Lastwiderstand beinhaltet.

6. Vorrichtung nach einem der vorhergehenden Ansprüche, **dadurch gekennzeichnet, dass** das Sensormodul (26) eine Anzeigeeinrichtung aufweist, durch welche das Ergebnis der Überprüfung des Sensormoduls (26) anzeigbar ist.

7. Vorrichtung nach Anspruch 6, **dadurch gekennzeichnet, dass** die Anzeigeeinrichtung wenigstens eine LED umfasst.

8. Vorrichtung nach einem der Ansprüche 1 bis 5, **dadurch gekennzeichnet, dass** die Mittel zur Aktivierung der Testroutine zusätzlich eine Einrichtung mit einem elektrischen Stromkreis umfassen, welche abhängig von einem durch den elektrischen Stromkreis fließenden Strom den Start der Testroutine aktiviert.

9. Vorrichtung nach Anspruch 8, **dadurch gekennzeichnet, dass** der elektrische Stromkreis von außen her zugängige Kontakte aufweist und derart ausgebildet ist, dass er durch Anlegen eines Multimeters an die Kontakte geschlossen wird und die dadurch aktivierte Testroutine einen Stromfluss durch den elektrischen Stromkreis bzw. eine zwischen den Kontakten anliegende Spannung erzeugt und gegebenenfalls verändert, wobei der Stromfluss bzw. die Spannung durch das Mulimeter mess- und darstellbar ist

10. Vorrichtung nach einem der vorhergehenden Ansprüche, **dadurch gekennzeichnet, dass** die Einrichtung zur Überprüfung der Funktionsfähigkeit des Sensormoduls (26) wenigstens einen Magnetfeldsensor und/oder einen Magnetschalter aufweist, welcher abhängig von der Feldstärke des im Bereich des Sensormoduls (26) wirksamen Magnetfelds den Start der Testroutine aktiviert.

11. Vorrichtung nach einem der vorhergehenden Ansprüche, **dadurch gekennzeichnet, dass** das Sensormodul (26) erst im Fahrzustand des Fahrzeugs ein Messsignal generiert und an das Steuergerät (18) überträgt und zur Detektion des Fahrzustands des Fahrzeugs wenigstens einen Beschleunigungssensor beinhaltet, welcher zugleich von den Mitteln zur Aktivierung der Testroutine umfasst ist.

12. Vorrichtung nach einem der vorhergehenden Ansprüche, **dadurch gekennzeichnet, dass** die Einrichtung zur Überprüfung der Funktionsfähigkeit des Sensormoduls (26) derart ausgebildet ist, dass die Testroutine nur in bestimmten Mindestzeitabständen aktivierbar ist.

13. Vorrichtung nach einem der vorhergehenden Ansprüche **dadurch gekennzeichnet, dass** die Einrichtung zur Überprüfung der Funktionsfähigkeit des Sensormoduls (26) derart ausgebildet ist, dass die Testroutine nur in vom Fahrbetrieb des Fahrzeugs abweichenden Zuständen wie im Fahrzeugstillstand oder in einem Auslieferungszustand des Sensormoduls aktivierbar ist, in welchen das Sensormodul (26) nicht am oder in den Fahrzeugreifen (6) verbaut ist.

14. Vorrichtung nach Anspruch 13, **dadurch gekennzeichnet, dass** der Auslieferungszustand des Sensormoduls (26) durch einen gegenüber einem Betriebszustand des Sensormoduls (26) geringeren Verbrauch an elektrischer Energie gekennzeichnet ist.

15. Vorrichtung nach Anspruch 14, **dadurch gekennzeichnet, dass** die Einrichtung zur Überprüfung der Funktionsfähigkeit des Sensormoduls (26) derart ausgebildet ist, dass das Sensormodul (26) durch die Aktivierung der Testfunktion vom Auslieferungszustand in den Betriebszustand geschaltet wird.

16. Vorrichtung nach Anspruch 14, **dadurch gekennzeichnet, dass** die Einrichtung zur Überprüfung der Funktionsfähigkeit des Sensormoduls (26) derart ausgebildet ist, dass das Sensormodul (26) nach dem Ablauf der Testroutine in den vor dem Ablauf der Testroutine herrschenden Zustand zurück versetzt wird.

17. Vorrichtung nach einem der vorhergehenden Ansprüche, **dadurch gekennzeichnet, dass** die Mittel zur Aktivierung der Testroutine zusätzlich Folgendes umfassen: Eine Einrichtung, welche abhängig von der Feldstärke eines im Bereich des Sensormoduls (26) wirksamen Magnetfelds den Start der Testroutine aktiviert.

18. Fahrzeug mit einer Vorrichtung nach einem der vorhergehenden Ansprüche.

## Claims

1. Device (20) for detecting and wirelessly transmitting at least one measurement signal characterizing the state of a vehicle tire (6) of a vehicle, such as the tire pressure and/or tire air temperature, containing at least one sensor module (26) which is arranged in or on the vehicle tire and has at least one sensor (22, 24) for detecting the measurement signal, and having an energy store which supplies the sensor module (26) with electrical energy, wherein the sensor module (26) also has an apparatus for checking the functional capability of the sensor module (26), having at least one test routine and means for activating the test routine, **characterized in that** the means for activating the test routine comprise the following: an apparatus having an acceleration sensor which activates the start of the test routine as a function of the acceleration acting on the sensor module (26) wherein the test routine is activated if the sensor module is accelerated manually before installation and then the acceleration measure by the acceleration sensor exceeds a predefined minimum acceleration.

2. Device according to one of the preceding claims, **characterized in that** the test routine includes checking of the charge state of the energy store.

3. Device according to Claim 2, **characterized in that** the test routine includes emission of a measurement signal and checking of the charge state of the energy store before, during and after the emission of the measurement signal.

4. Device according to Claim 3, **characterized in that** the measurement signal is a measurement signal which originates from a preceding measurement process, is stored in a memory of the apparatus for checking the functional capability of the sensor module (26) and can be read out therefrom.

5. Device according to Claim 2, **characterized in that** the apparatus for checking the functional capability of the sensor module (26) includes at least one load resistor which can be connected to the energy store after the activation of the test routine.

6. Device according to one of the preceding claims, **characterized in that** the sensor module (26) has a display apparatus by means of which the result of the checking of the sensor module (26) can be displayed.

7. Device according to Claim 6, **characterized in that** the display apparatus comprises at least one LED.

8. Device according to one of Claims 1 to 5, **characterized in that** the means for activating the test routine additionally comprise an apparatus which has an electric circuit and which activates the start of the test routine as a function of a current flowing through the electric circuit.

9. Device according to Claim 8, **characterized in that** the electric circuit has contacts which are accessible from the outside and is embodied in such a way that it is closed by applying a multimeter to the contacts, and the test routine which is activated as a result generates, and if appropriate changes, a flow of current through the electric circuit or a voltage applied between the contacts, wherein the flow of current or the voltage can be measured and displayed by means of the multimeter.

10. Device according to one of the preceding claims, **characterized in that** the apparatus for checking the functional capability of the sensor module (26) has at least one magnetic field sensor and/or one magnetic switch which activates the start of the test routine as a function of the field strength of the magnetic field acting in the area of the sensor module (26).

11. Device according to one of the preceding claims, **characterized in that** the sensor module (26) generates a measurement signal only in the driving state of the vehicle, and transmits said measurement signal to the control unit (18), and includes, for the purpose of detecting the driving state of the vehicle, at least one acceleration sensor which is included at the same time in the means for activating the test routine.

12. Device according to one of the preceding claims, **characterized in that** the apparatus for checking the functional capability of the sensor module (26) is embodied in such a way that the test routine can be activated only at certain minimum time intervals.

13. Device according to one of the preceding claims, **characterized in that** the apparatus for checking the functional capability of the sensor module (26) is embodied in such a way that the test routine can be activated only in states which deviate from the driving mode of the vehicle, such as in the stationary state of the vehicle or in a delivery state of the sensor module, in which states the sensor module (26) is not installed on or in the vehicle tire (6).

14. Device according to Claim 13, **characterized in that** the delivery state of the sensor module (26) is **characterized by** lower consumption of electrical energy compared to an operating state of the sensor module (26).

15. Device according to Claim 14, **characterized in that** the apparatus for checking the functional capability of the sensor module (26) is embodied in such a way that the sensor module (26) is switched from the delivery state into the operating state by the activation of the test function.

16. Device according to Claim 14, **characterized in that** the apparatus for checking the functional capability of the sensor module (26) is embodied in such a way that after the test routine sequence the sensor module (26) is returned to the state prevailing before the test routine sequence.

17. Device according to one of the preceding claims, **characterized in that** the means for activating the test routine comprise the following: an apparatus which activates the start of the test routine as a function of the field strength of a magnetic field acting in the area of the sensor module (26)

18. Vehicle having a device according to one of the preceding claims.

## Revendications

1. Système (20) de détection et de transmission sans fil d'au moins un signal de mesure caractérisant l'état d'un pneumatique (6) d'un véhicule, comme la pression de l'air dans le pneumatique et/ou la température de l'air dans le pneumatique, comportant au moins un module (26) de capteur, qui est monté dans ou sur le pneumatique du véhicule et qui a au moins un capteur (22, 24) de détection du signal de mesure, ainsi qu'un accumulateur d'énergie alimentant le module (26) de capteur en énergie électrique, le module (26) de capteur ayant en outre un dispositif de contrôle de l'aptitude à fonctionner du module (26) de capteur, ayant au moins une routine de test et des moyens d'activation de la routine de test, **caractérisé en ce que** les moyens d'activation de la routine de test comprennent ce qui suit : un dispositif ayant un capteur d'accélération, qui, en fonction de l'accélération agissant sur le module (26) de capteur, active le lancement de la routine de test, la routine de test étant activée lorsque le module de capteur est accéléré manuellement avant le montage et ensuite l'accélération mesurée par le capteur d'accélération dépasse une accélération minimum donnée à l'avance.

2. Système suivant l'une des revendications précédentes, **caractérisé en ce que** la routine de test comporte un contrôle de l'état de charge de l'accumulateur d'énergie.

3. Système suivant la revendication 2, **caractérisé en ce que** la routine de test comporte une émission d'un signal de mesure, ainsi qu'un contrôle de l'état de charge de l'accumulateur d'énergie avant, pendant et après l'émission du signal de mesure.

4. Système suivant la revendication 3, **caractérisé en ce que** le signal de mesure est un signal de mesure provenant d'une opération de mesure précédente mémorisée dans une mémoire du dispositif de contrôle de l'aptitude à fonctionner du module (26) de capteur et pouvant y être lu.

5. Système suivant la revendication 2, **caractérisé en ce que** le dispositif de contrôle de l'aptitude à fonctionner du module (26) de capteur comporte au moins une résistance de charge pouvant être branchée sur l'accumulateur d'énergie après l'activation de la routine de test.

6. Système suivant l'une des revendications précédentes, **caractérisé en ce que** le module (26) de capteur a un dispositif d'affichage par lequel le résultat du contrôle du module (26) de capteur peut être affiché.

7. Système suivant la revendication 6, **caractérisé en ce que** le dispositif d'affichage comprend au moins une DEL.

8. Système suivant l'une des revendications 1 à 5, **caractérisé en ce que** les moyens d'activation de la routine de test comprennent supplémentairement un dispositif ayant un circuit électrique, qui, en fonction d'un courant passant dans le circuit électrique, active le lancement de la routine de test.

9. Système suivant la revendication 8, **caractérisé en ce que** le circuit électrique a des contacts accessibles à l'extérieur et est constitué de manière à être fermé par l'application d'un multimètre aux contacts et la routine de test ainsi activée produit et, le cas échéant, modifie un flux de courant dans le circuit de courant électrique ou une tension s'appliquant entre les contacts, le flux de courant ou la tension pouvant être mesuré et représenté par le multimètre.

10. Système suivant l'une des revendications précédentes, **caractérisé en ce que** le dispositif de contrôle de l'aptitude à fonctionner du module (26) de capteur a au moins un capteur de champ magnétique et/ou un interrupteur magnétique, qui active le lancement de la routine de test en fonction de l'intensité du champ magnétique efficace dans la zone du module (26) de capteur.

11. Système suivant l'une des revendications précédentes, **caractérisé en ce que** le module (26) de capteur produit un signal de mesure seulement dans l'état de marche du véhicule et le transmet à l'appareil (18) de commande et comporte, pour la détection de l'état de marche du véhicule, au moins un capteur d'accélération, qui est inclus en même temps dans les moyens d'activation de la routine de test.

12. Système suivant l'une des revendications précédentes, **caractérisé en ce que** le dispositif de contrôle de l'aptitude à fonctionner du module (26) de capteur est constitué de manière à pouvoir activer la routine de test seulement à des intervalles de temps minimum déterminés.

13. Système suivant l'une des revendications précédentes, **caractérisé en ce que** le dispositif de contrôle de l'aptitude à fonctionner du module (26) de capteur est constitué de manière à pouvoir activer la routine de test seulement dans des états s'écartant du fonctionnement en marche du véhicule, comme à l'arrêt du véhicule, ou dans un état de livraison du module de capteur, dans lequel le module (26) de capteur n'est pas posé sur ou dans les pneumatiques (6) du véhicule.

14. Système suivant la revendication (13), **caractérisé en ce que** l'état de livraison du module (26) de capteur est **caractérisé par** une consommation d'énergie électrique plus petite que dans un état de fonctionnement du module (26) de capteur.

15. Système suivant la revendication (14), **caractérisé en ce que** le dispositif de contrôle de l'aptitude à fonctionner du module (26) de capteur est constitué de manière à faire passer le module (26) de capteur, par l'activation de la fonction de test, de l'état de livraison à l'état de fonctionnement.

16. Système suivant la revendication (14), **caractérisé en ce que** le dispositif de contrôle de l'aptitude à fonctionner du module (26) de capteur est constitué de manière à faire revenir le module (26) de capteur, après le déroulement de la routine de test, à l'état régnant avant le déroulement de la routine de test.

17. Système suivant l'une des revendications précédentes, **caractérisé en ce que** les moyens d'activation de la routine de test comprennent supplémentairement ce qui suit : un dispositif, qui, en fonction de l'intensité d'un champ magnétique actif dans la zone du module (26) de capteur, active le lancement de la routine de test.

18. Véhicule ayant un système suivant l'une des revendications précédentes.
